(19) **Europäisches Patentamt**

**European Patent Office**

**Office européen des brevets**

(11) **EP 1 211 495 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
*G01L 5/04* *(2006.01)*       *B65H 23/04* *(2006.01)*
*B65H 23/188* *(2006.01)*

(21) Anmeldenummer: **01126456.1**

(22) Anmeldetag: **09.11.2001**

(54) **Vorrichtung und Verfahren zum automatischen Eichen von Bahnspannungswandlern**

Apparatus for and method of automatic calibration of a web tension transducer

Appareil et procédé pour le calibrage automatique d'un transducteur pour mesurer la tension d'une bande

(84) Benannte Vertragsstaaten:
**AT BE CH CY DE DK ES FI FR GB GR IE IT LI LU MC NL PT SE TR**

(30) Priorität: **29.11.2000 US 725556**

(43) Veröffentlichungstag der Anmeldung:
**05.06.2002 Patentblatt 2002/23**

(73) Patentinhaber: **Goss International Americas, Inc. Dover, NH 03820 (US)**

(72) Erfinder:
• **Cote, Kevin Lauren**
  **Durham, NH 03824 (US)**
• **Schroeder, Lothar John**
  **Porthmouth, NH 03801 (US)**

(74) Vertreter: **Domenego, Bertrand et al**
**Cabinet Lavoix**
**2, place d'Estienne d'Orves**
**75441 Paris Cedex 09 (FR)**

(56) Entgegenhaltungen:
**WO-A-90/15715        DE-A- 3 020 847**

## Beschreibung

Die vorliegende Erfindung betrifft eine Vorrichtung und ein Verfahren zum Eichen von Bahnspannungswandlern in Rotationsdruckmaschinen gemäß dem Oberbegriff der Ansprüche 1 und 8.

Rotationsdruckmaschinen bedrucken Endlosbahnen eines zu bedruckenden Materials wie zum Beispiel Papier. Dabei kann die Messung der Bahnspannung in der Materialbahn beim Betrieb einer Rotationsdruckmaschine kritisch sein. Verschiedene Papierarten weisen unterschiedliche Spannungsbeträge in der Materialbahn auf, wobei diese proportional zur Geschwindigkeit der Materialbahn und zum Elastizitätsmodul des Papiers/Materials sind.

Eine Möglichkeit, um die Spannung in einer Materialbahn zu messen, bietet der Einsatz von Spannungsanalogwandlern. Jedoch sind die bekannten Spannungswandler analoge Vorrichtungen, die häufig geeicht werden müssen, damit ein von dem Wandler erzeugtes elektrisches Signal den IST-Werten der Bahnspannung richtig zugeordnet werden kann. Das gegenwärtig übliche Eichverfahren wird bei Stillstand der Materialbahn durch manuelle Messungen der vom Wandler erzeugten Signale durchgeführt. Dieses Verfahren ist zeitaufwendig, und seine Genauigkeit hängt vom Leistungsvermögen des Menschen ab. Darüber hinaus muss die Eichung bei Stillstand der Druckmaschine ausgeführt werden. Das kann zu Produktionsausfällen aufgrund der durch die Eichung des Bahnspannungswandlers erforderlichen Stillstandszeiten bzw. zu schlechten Druckleistungen führen, die aus den fehlerhaften Informationen bezüglich der Bahnspannung resultieren, die durch die ungeeichten Bahnspannungswandler geliefert werden.

Einrichtungen bzw. Verfahren zur Regelung von Spannungen in einer Materialbahn sind Z.B. aus DE 30 20 847 oder WO 90/15715 bekannt.

Aufgabe der vorliegenden Erfindung ist es, eine Vorrichtung und ein Verfahren zu schaffen, die einen Prozess zum automatischen Eichen eines Bahnspannungswandlers vorsehen. Eine weitere oder alternative Aufgabe der vorliegenden Erfindung ist es, ein Verfahren zur Berechnung des Spannungsbetrages in einem Papier bei einer bestimmten Geschwindigkeit zu schaffen.

Diese Aufgaben werden durch eine Vorrichtung mit den Merkmalen des Anspruchs 1 sowie durch ein Verfahren mit den Merkmalen des Anspruchs 8 gelöst.

Vorteilhafte Ausgestaltungen der Erfindung sind in den abhängigen Ansprüchen 2-7 und 9-18 definiert.

Ohne manuelles Eingreifen kann auf diese Weise der Spannungswandler unter Verwendung des Spannungskorrekturwertes geeicht werden.

Der Prozessor ist dazu gestaltet einen Korrekturfaktor zu berechnen, welcher der Spannungskorrekturwert ist als Funktion des Ausgangssignales der wenigstens einen Walze.

Die Merkmale der vorliegenden Erfindung werden in der folgenden Beschreibung bevorzugter Ausführungsbeispiele im Zusammenhang mit den beigefügten, nachstehend aufgeführten Zeichnungen näher erläutert.

Es zeigen:

Fig. 1 eine Seitenansicht eines automatischen Spannungseichsystems mit einem Motor und einem Wandler,

Fig. 2 eine graphische Darstellung der Winkelgeschwindigkeit als Funktion des Motordrehmoments,

Fig. 3 eine graphische Darstellung der Materialbahnspannung als Funktion des Betriebsdrehmoments, und

Fig. 4 eine graphische Darstellung einer weiteren Ausführungsform, in der das Anlaufdrehmoment nicht berechnet werden muss, und eine Veränderung der Materialbahnspannung als Funktion einer Drehzahländerung des Motors dividiert durch einen Drehzahl-Sollwert.

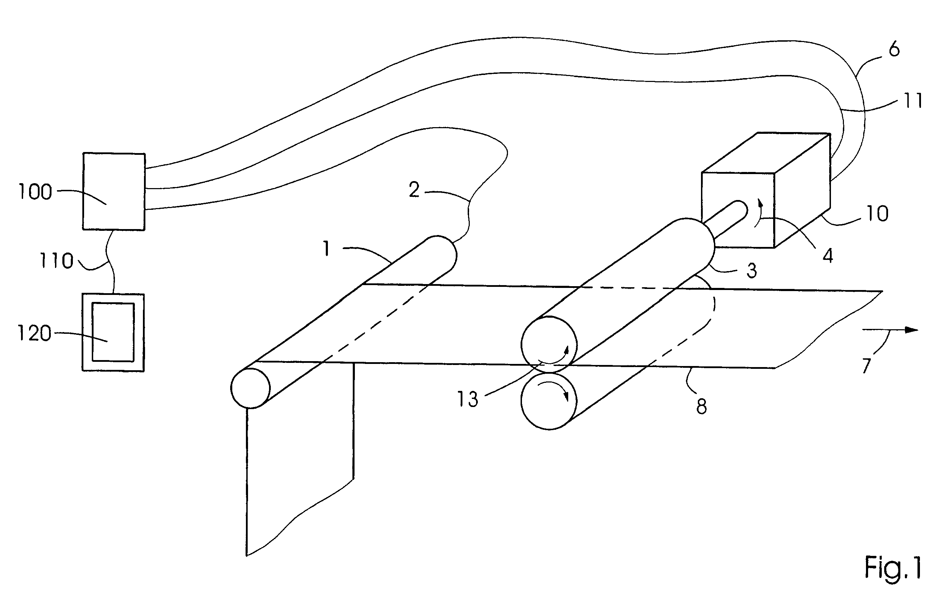

Fig. 1 zeigt eine Seitenansicht eines automatischen Eichsystems für Bahnspannungen, das einen Motor 10 und eine Spannungswandler-Walze 1 umfasst.

Ein Presswalzenpaar 3 bewegt eine Materialbahn 8 in eine Richtung 7. Der Motor 10 treibt die Presswalzen 3 über ein mechanisches Verbindungsglied an. Der Motor 10 überträgt ein erstes Referenzsignal 6 und ein zweites Referenzsignal 11 drahtlos oder über optische oder elektrische Verbindungen an einen Prozessor 100, wobei das erste Referenzsignal 6 proportional zum Drehmoment 4 des Motors 10 ist und das zweite Referenzsignal 11 proportional zur Winkelgeschwindigkeit 13 des Motors 10. Den Presswalzen 3 ist in Bewegungsrichtung eine Spannungswandler-Walze 1 vorgeschaltet, die ein IST-Spannungssignal 2, das proportional zur Spannung in der Materialbahn 8 ist, drahtlos oder über eine optische oder eine elektrische Verbindung an den Prozessor 100 überträgt. Während eines Eichvorgangs bildet das IST-Spannungssignal 2 ein zum Vergleich anstehendes IST-Zahnspannungsreferenzsignal. Der Prozessor 100 sendet ein geeichtes Ausgangssignal 110 zum Beispiel an ein Bildschirmgerät 120.

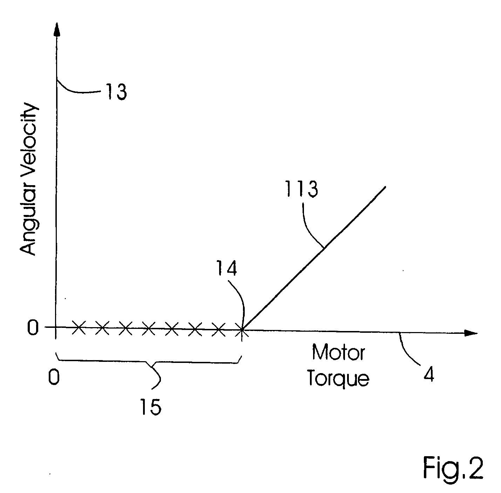

Fig. 2 zeigt eine graphische Darstellung der Winkelgeschwindigkeit 13 des Motors als Funktion des Motordrehmoments 4. Wenn die Materialbahn 8 keinen Kontakt mit der Spannungswandler-Walze 1 oder mit den Presswalzen 3 hat und der Motor 10 und die Presswalzen 3 stillstehen, wird das Drehmoment 4 des Motors 10 erhöht. Durch Steuerung der Winkelgeschwindigkeit 13 des Motors 10 über das zweite von dem Motor 10 abgegebene Referenzsignal 11 bestimmt der Prozessor 100 ein Anlaufdrehmoment 14. Das Drehmoment 4 des Motors 10 wird über einen Bereich 15 gesteigert, bis eine IST-Winkelgeschwindigkeit 113 angezeigt wird, wobei das eine Winkelgeschwindigkeit 13 ist, bei der die Presswalzen 3 sich drehen. Dabei wird das höchste vom Motor 10 an den Prozessor 100 vor Erreichen der IST-Winkelgeschwindigkeit 113 durch das erste Referenzsignal 6 übertragene Drehmoment 4 als Anlaufdrehmoment 14 aufgezeichnet. Dieser Vorgang kann mehrere Male wiederholt werden, um einen Durchschnittswert des Anlaufdrehmoments 14 berechnen zu können.

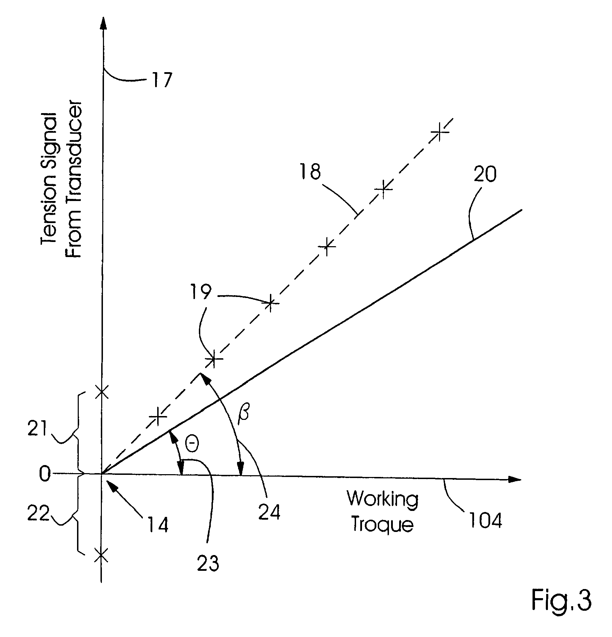

Fig. 3 ist eine graphische Darstellung der Bahnspannung 17 als Funktion des Betriebsdrehmoments 104 (das sich aus dem Motordrehmoment 4 minus dem Anlaufdrehmoment 14 ergibt). Nach der Berechnung des Anlaufdrehmoments 14 speichert der Prozessor 100 das von der Spannungswandler-Walze 1 zum Vergleich anliegende IST-Spannungssignal 2 und vergleicht dieses mit einer bekannten Größe, die in diesem Fall Null ist. Hierbei hat die Materialbahn 8 immer noch keinen Kontakt mit der Spannungswandler-Walze 1 oder den Presswalzen 3. Daher sollte das zum Vergleich anstehende IST-Spannungssignal 2 ebenfalls Null sein. Falls jedoch das zum Vergleich anstehende IST-Spannungssignal 2 nicht Null ist, bestimmt der Prozessor 100 eine Korrekturabweichung, wobei es sich um eine positive Korrekturabweichung 21 oder um eine negative Korrekturabweichung 22 handeln kann.

Die Materialbahn 8 wird dann bewegt, so dass sie die Presswalzen 3 und die Spannungswandler-Walze 1 kontaktiert. Während die Materialbahn über die Spannungswandler-Walze 1 und durch die Presswalzen 3 läuft, wird das Drehmoment 4 des Motors 10 von dem Anlaufdrehmoment 14 bis zu einer vorberechneten oberen Grenze gesteigert. Während das Drehmoment 4 des Motors 10 gesteigert wird, liefert die Spannungswandler-Walze 1 wenigstens zwei zum Vergleich dienende IST-Spannungssignale 2 an den Prozessor 100. Der Prozessor 100 subtrahiert die Korrekturabweichung von jedem der wenigstens zwei zum Vergleich anstehenden IST-Spannungssignale 2, um auf diese Weise wenigstens zwei Normwerte oder Wertepunkte 19 zu erzeugen, die jedem der wenigstens zwei zum Vergleich anstehenden IST-Spannungssignale 2 entsprechen. Der Prozessor linearisiert dann jeden der zwei Normwerte 19 und trägt sie in der Kurve ein, welche die Bahnspannung 17 in Abhängigkeit von dem Betriebsdrehmoment 104 darstellt. Der Prozessor bildet dann eine gemessene Wertekurve 18 durch Verbinden der wenigstens zwei diskreten Wertepunkte 19. Die gemessene Wertekurve 18 kann dann mit einer Sollwertkurve 20 verglichen werden, um einen Korrekturfaktor zu bestimmen. Die in dieser Ausführungsform angenommene Wertekurve ist ganz einfach eine Gerade, in der die angenommene Bahnspannung 17 gleich dem Betriebsdrehmoment 104 dividiert durch den Radius der Spannungswandler-Walze 1 ist, nämlich:

TN = TQ/R,

wobei TN die Bahnspannung, TQ das Betriebsdrehmoment und R der Radius der Walze 1 sind. Der Prozessor 100 berechnet den Winkel der gemessenen Wertekurve 18 in Bezug auf die X-Achse und speichert den Winkel als gemessenen Wertewinkel 24. Der Prozessor 100 berechnet dann den Winkel einer Sollwertkurve 20 in Bezug auf die X-Achse, um einen Sollwertwinkel 23 zu bilden. Danach kann der Prozessor 100 den Quotienten aus dem Sollwertwinkel 23 dividiert durch den gemessenen Wertewinkel 24 berechnen, um auf diese Weise einen Korrekturfaktor zu bilden.

Der Prozessor 100 kann dann spätere IST-Spannungssignale 2 korrigieren, zum Beispiel während eines Drucklaufes, indem die Korrekturabweichung von den Signalen 2 subtrahiert wird und das Ergebnis mit dem Korrekturfaktor multipliziert wird, um auf diese Weise den korrigierten IST-Bahnspannungs-Wert 110 zu erhalten, das heisst, den geeichten Bahnspannungswert = (IST-Signalwert - Korrekturabweichung) * Korrekturfaktor. Der Prozessor 100 kann dann den geeichten Bahnspannungswert 110 an das Bildschirmgerät 120 oder an andere Komponenten der Druckmaschine übertragen, die eine Bahnspannungsmessung benötigen.

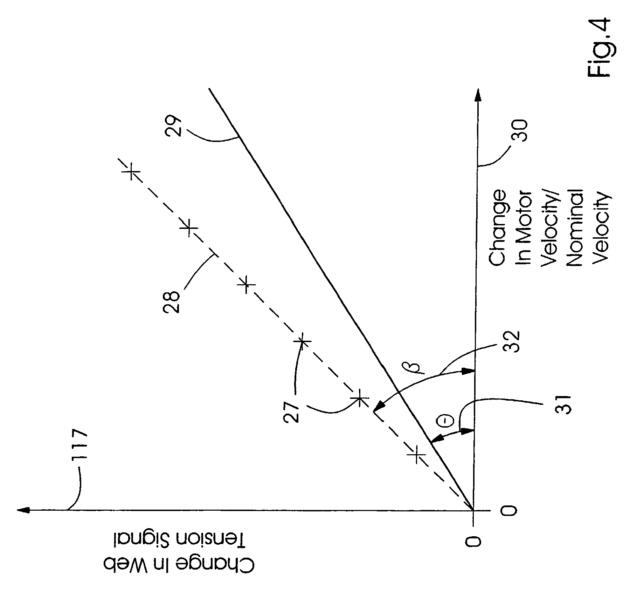

Fig. 4 zeigt eine graphische Darstellung eines alternativen Verfahrens gemäß der vorliegenden Erfindung, in dem das Anlaufdrehmoment des Motors 10 nicht berechnet werden muss. Die Kurve zeigt eine Veränderung der Bahnspannung 117, die gegen eine Drehzahländerung des Motors 10 dividiert durch eine Drehzahl-Sollwert 30 dargestellt ist.

Die Spannungswandler-Walze 1 kann, wie im Folgenden ausgeführt ist, automatisch geeicht werden, ohne dass zuerst das Anlaufdrehmoment 14 bestimmt wird. Wenn die Materialbahn 8 keinen Kontakt mit der Spannungswandler-Walze 1 oder mit den Presswalzen 3 hat, zeichnet der Prozessor 100 das IST-Spannungssignal 2 der Spannungswandler-Walze 1 auf und vergleicht dieses mit der bekannten Spannungsgröße, im vorliegenden Fall Null, das heisst, da die Materialbahn 8 keinen Kontakt mit der Spannungswandler-Walze 1 hat, sollte das zum Vergleich anstehende IST-Signal 2 ebenfalls Null sein. Falls jedoch das zum Vergleich anstehende IST-Signal 2 nicht Null ist, dann bestimmt der Prozessor 100 eine Korrekturabweichung, wie bereits in dem vorhergehenden Verfahren in Verbindung mit den Fig. 2 und 3 offenbart wurde.

Dann wird die Materialbahn 8 in Anlage mit den Presswalzen 3 und der Spannungswandler-Walze 1 gebracht, so dass sie diese kontaktiert. Die Materialbahn 8 läuft über die Spannungswandler-Walze 1 und durch die Presswalzen 3, wobei das Elastizitätsmodul des Papiers und die Geschwindigkeit bekannt sind. Die Drehzahl 30 des Motors 10 wird mehrere Male leicht gesteigert, und die sich ergebende Änderung in der Bahnspannung 27 wird aufgezeichnet, linearisiert und als Funktion aus der Veränderung der Motordrehzahl und dem Drehzahl-Sollwert aufgetragen. Der Prozessor 100 bildet dann eine gemessene Geschwindigkeitswerte-Kurve 28, indem er die wenigstens zwei diskreten Wertepunkte 27 miteinander verbindet. Der Prozessor 100 kann dann die gemessene Geschwindigkeitswerte-Kurve 28 mit einer vorberechneten Geschwindigkeitswerte-Kurve 29 vergleichen, die sich nach der Gleichung Veränderung in der Bahnspannung dTN gleich dem bekannten Elastizitätsmodul E des Papiers multipliziert mit der Veränderung der Drehzahl dV dividiert durch den Drehzahl-Sollwert V, das heisst,

$$dTN = E * dV/V$$

bestimmt. Als nächstes berechnet der Prozessor 100 den Winkel der gemessenen Geschwindigkeitswerte-Kurve 28 relativ zur x-Achse, um den gemessenen Winkel 32 zu bilden. Dann berechnet der Prozessor 100 den Winkel der vorberechneten Kurve 29 mit Bezug auf die x-Achse, um einen Sollwinkel 31 zu bilden. Der Prozessor 100 berechnet dann den Quotienten aus dem Sollwinkel 31 dividiert durch den gemessenen Winkel 32, um einen Korrekturfaktor zu bilden (Winkel 32 / Winkel 31).

Der Prozessor 100 kann dann in der gleichen Weise wie die vorhergehende Ausführungsform ein geeichtes Bahnspannungssignal bestimmen, nämlich durch Subtraktion der Korrekturabweichung und Multiplikation des IST-Spannungssignals 2 mit dem Korrekturfaktor, um die geeichten Signale 110 zu gewinnen. Der Prozessor 100 kann dann die geeichten Signale 110, die gemessene Geschwindigkeitswerte-Kurve 28 und die vorberechnete Geschwindigkeitswerte-Kurve 29 an das Bildschirmgerät 120 oder an andere Komponenten der Druckmaschine, die einen Bahnspannungswert benötigen, übertragen.

In einigen Fällen ist es möglich, dass das Elastizitätsmodul des Papiers unbekannt ist, folglich ist auch die vorberechnete Kurve 29 unbekannt. Um diese vorberechnete Kurve 29 zu erhalten, kann der Bediener die Bahnspannungswandler-Walze 1 manuell eichen und so die für diese Papierart sich ergebende vorberechnete Kurve 29 zu erzeugen. Die Ergebnisse für verschiedene Papierarten können gespeichert werden und immer dann Verwendung finden, wenn das gleiche Papier eingesetzt wird.

**Liste der Bezugszeichen**

1    Spannungswandler-Walze
2    IST-Spannungssignal
3    Presswalze
4    Drehmoment
6    erstes Referenzsignal
8    Materialbahn
10   Motor
11   zweites Referenzsignal
13   Winkelgeschwindigkeit
14   Anlaufdrehmoment
15   Bereich
17   Bahnspannung
18   Wertekurve
19   Normwerte/ Wertepunkte
20   Sollwertkurve
21   positive Korrekturabweichung
22   negative Korrekturabweichung
23   Sollwertwinkel
24   gemessener Wertewinkel
27   Spannungsänderung/diskrete Wertepunkte
28   gemessene Geschwindigkeitswerte-Kurve
29   vorberechnete Geschwindigkeitswerte-Kurve
31   Sollwinkel
32   gemessener Winkel
100  Prozessor
104  Betriebsdrehmoment
110  geeichtes Ausgangssignal
113  IST- Winkelgeschwindigkeit
117  Veränderung in der Bahnspannung
120  Bildschirmgerät

**Patentansprüche**

1. Vorrichtung zum Eichen eines Spannungswandlers für eine Materialbahn mit

   - einem Paar Presswalzen (3)
   - einem Motor (10) zum Antreiben von wenigstens einer der Presswalzen (3),

   wobei von dem Motor wenigstens ein Walzenausgabesignal (6, 11) ausgebbar ist, das eine Funktion eines Ausgabesignals eines Motordrehmoments (4) oder/und eines Ausgabesignals einer Motordrehzahl ist,

   - einer Bahnspannungswandler-Walze (1), die den Presswalzen (3) in Bewegungsrichtung vorgeordnet ist, wobei von dem Bahnspannungswandler ein Spannungsausgabesignal(2) erzeugbar ist, das eine Funktion der Ist-Bahnspannung der Materialbahn (8) ist, und
   - einem Prozessor (100), welcher dazu ausgelegt ist, das wenigstens eine Walzenausgabesignal (6,11) und das Spannungsausgabesignal (2) zu empfangen,

   wobei der Prozessor (100) dazu gestaltet ist einen Spannungskorrekturwert als Funktion des wenigstens einen Walzenausgabesignals (6, 11) und des Spannungsausgabesignals (2) zu berechnen, unter Bestimmung einer winkelabweichung einer linearisierten Wertekurve der Signalwerte für Motordrehmoment und/oder Motordrehzahl in Abhängigkeit von der Bahnspannung gegenüber einer Sollwertkurve.

2. Vorrichtung gemäß Anspruch 1, wobei der Spannungskorrekturwert weiterhin eine Funktion einer vorberechneten Bahnspannung(TN) oder einer vorgegebenen Veränderung der Bahnspannung ist wobei die Bahnspannung mittels der Formel TN=TQ/R berechnet wird, in der TN die BahnspannungTQ das Betriebsdrehmoment und R der Radius der Bahnspannungswandler-Walze (1) ist (Seite 7, Zeile 2 bis 8).

3. Vorrichtung gemäß Anspruch 1 oder 2, wobei das wenigstens eine Walzenausgabesignal sowohl ein Motordrehmomentausgabesignal (6) als auch ein Motordrehzahlausgabesignal (11) umfasst.

4. Vorrichtung gemäß Anspruch 1, wobei von dem Prozessor (100) ein geeichter Bahnspannungswert (110) als Funktion des Spannungsausgabesignals (2) und des Spannungskonrekturwertes ausgebbar ist,
wobei der geeichte Bahnspannungswert (110) nach der Formel (Spannungsausgabesignal (2) - Korrekturabweichung (21, 22))* Spannungskorrekturwert berechnet wird. (Seite 7, Zeile 19 i.V. m Seite 3, Zeile 4)

5. Vorrichtung gemäß Anspruch 1, wobei von dem Prozessor (100) ein Anlaufdrehmoment (14) des Motors (10) berechenbar ist, und wobei das Anlaufdrehmoment dadurch berechnet wird, dass bei Stillstand der Presswalzen (3) das Motordrehmoment so weit erhöht wird bis eine IST-Winkelgeschwindigkeit erreicht ist, bei der sich die Presswalzen drehen. (Seite 5, Zeile 23 bis Seite 6, Zeile 4)

6. Vorrichtung gemäß Anspruch 4, wobei von dem Prozessor (100) eine Korrekturabweichung (21, 22) des Spannungsausgabesignals (2) berechenbar ist, wobei die Korrekturabweichung die Differenz eines IST-Spannungsausgabesignals (2) mit einer bekannten Spannungsgröße, insbesondere Null, ist. (Seite 6, § 3)

7. Vorrichtung gemäß Anspruch 4 oder 6, wobei von dem Prozessor (100) ein Spannungskorrekturwert als Funktion des wenigstens einen Walzenausgabesignals (6, 11) und der vorberechneten Bahnspannung oder der vorberechneten Veränderung der Bahnspannung berechenbar ist, wobei der Spannungskorrekturwert der Quotient aus einem Sollwertwinkel (23) einer Sollwertkurve (20) und einem gemessenen Wertewinkel (24) einer gemessenen Wertekurve ist. (Seite 7, § 1)

8. Verfahren zum Eichen eines Spannungswandlers für Materialbahnen mit den folgenden Schritten:

- Führen einer Materialbahn über eine Bahnspannungswandler-Walze (1) und danach durch ein Paar Presswalzen (3), wobei wenigstens eine der Presswalzen (3) durch einen Motor (10) angetrieben wird,

wobei von dem Motor wenigsten ein Walzenausgabesignal (6, 11) ausgegeben wird, das eine Funktion eines Ausgabesignals eines Motordrehmoments (4) und/oder eines Ausgabesignals einer Motordrehzahl ist und wobei der Bahnspannungswandler ein Spannungsausgabesignal (2) erzeugt, das eine Funktion der IST-Bahnspannung der Materialbahn ist,

- verändern des Motordrehmoments und/oder der Motordrehzahl des Motors (10) und Auslesen der IST-Bahnspannung von dem Bahnspannungswandler in Abhängigkeit von dieser Veränderung, und
- Berechnen wenigstens eines Spannungskorrekturwertes als Funktion des wenigstens einen Walzenausgabesignals und des Spannungsausgabesignals unter Bestimmung einer Winkelabweichung einer linearisierten Wertekurve der Signalwerte für Motordrehmoment und/oder Motordrehzahl in Abhängigkeit von der Bahnspannung gegenüber einer Sollwertkurve.

9. Verfahren gemäß Anspruch 8, wobei weiterhin ein erstes Spannungsausgabesignal aus dem Bahnspannungswandler bei bekannter Bahnspannung ausgelesen wird, um eine Korrekturabweichung zu bestimmen, wobei die Korrekturabweichung die Differenz des ersten Spannungsausgabesignals (2) und einer bekannten Spannungsgröße, die der bekannten Bahnspannung entspricht, ist. (Seite 6, § 3)

10. Verfahren gemäß Anspruch 8, wobei weiterhin ein Anlaufdrehmoment (14) des Motors (10) bestimmt wird.

11. Verfahren gemäß Anspruch 10, wobei der Schritt des Veränderns zwischen dem Anlaufdrehmoment (14) und einem vorberechneten Drehmoment des Motors stattfindet.

12. Verfahren gemäß Anspruch 11, wobei die linearisierte Wertekurve die IST-Babnspannung in Abhängigkeit vom Motordrehmoment darstellt. (Seite 6, Zeile 28 bis 30)

13. Verfahren gemäß Anspruch 8, wobei der Schritt des Veränderns das Verändern einer Motordrehzahl in Bezug auf einen Drehzahl-Sollwert einschließt.

14. Verfahren gemäß Anspruch 13, wobei der wenigstens eine Spannungskorrekturwert weiterhin eine Funktion eines bekannten Elastizitätsmoduls E des Papiers ist, wobei der Spannungskorrekturwert aus dem Quotient des Winkels (32) einer gemessenen Geschwindigkeitwert-Kurve (28) und des Winkels (31) einer vorberechneten Geschwindigkeitswert-Kurve (29) gewonnen wird, und wobei sich die vorberechnete Geschwindigkeitswert-Kurve (29) nach der Gleichung dTN = E*dV/V berechnet, in der dTN die Veränderung der Bahnspannung, E der bekannte Elastizitätsmodul des Papiers, dV die Veränderung der Drehzahl und V der Drehzahl-Sollwert ist. (Seite 8, Zeile 15 bis Zeile 28)

15. Verfahren gemäß Anspruch 8, das weiterhin das Berechnen eines geeichten Bahnspannungsausgabesignals als eine Funktion der IST-Signale des Bahnspannungswandlers und des wenigstens einen Spannungskorrekturwerts umfasst, wobei der geeichte Bahnspannungswert (110) nach der Formel (Spannungsausgabesignal (2) - Korrekturabweichung (21, 22))* Spannungskorrekturwert berechnet wird. (Seite 7, Zeile 19 i.V.m. Seite 3, Zeile 4)

16. Verfahren gemäß Anspruch 9, wobei die bekannte Spannung Null ist.

17. Verfahren gemäß Anspruch 8, wobei der Schritt des Berechnens weiterhin das Berechnen eines Quotienten aus einem berechneten Wertewinkel und einem gemessenen Wertewinkel umfasst, um einen Korrekturfaktor zu bilden.

18. Verfahren gemäß Anspruch 10, mit folgendem weiteren Schritt:

> mehrmaliges Wiederholen des Schritts des Bestimmens eines Anlaufdrehmoments (14), um einen Durchschnittswert für das Anlaufdrehmoment (14) zu ermitteln.

**Claims**

1. A device for calibrating a tension transducer for a material web, comprising

> - a pair of press rollers (3),
> - a motor (10) for driving at least one of the press rollers (3),

wherein at least one roller output signal (6, 11), which is a function of an output signal of a motor torque (4) or/ and an output signal of a motor speed, can be output by the motor,

> - a web tension transducer roller (1) arranged upstream of the press rollers (3) with respect to the direction of movement, wherein a tension output signal (2), which is a function of the actual tension of the material web (8), can be generated by the web tension transducer, and

> - a processor (100) which is intended to receive the at least one roller output signal (6, 11) and the tension output signal (2), wherein the processor (100) is configured to calculate a tension correction value as a function of the at least one roller output signal (6, 11) and the tension output signal (2) by determining an angular deviation of a linearised curve of the signal values for motor torque and/or motor speed in dependence upon the web tension from a curve of desired values.

2. A device according to claim 1, wherein the tension correction value is also a function of a precalculated web tension (TN) or a predetermined change in the web tension, wherein the web tension is calculated by means of the formula TN=TQ/R, in which TN is the web tension, TQ is the operating torque and R is the radius of the web tension transducer roller (1) (page 7, lines 2 to 8).

3. A device according to claim 1 or 2, wherein the at least one roller output signal comprises both a motor torque output signal (6) and a motor speed output signal (11).

4. A device according to claim 1, wherein a calibrated web tension value (110) can be output by the processor (100) as a function of the tension output signal (2) and the tension correction value, wherein the calibrated web tension value (110) is calculated by means of the formula (tension output signal (2) - correction deviation (21, 22)) * tension correction value. (Page 7, line 19 in conjunction with page 3, line 4)

5. A device according to claim 1, wherein a starting torque (14) of the motor (10) can be calculated by the processor (100), and wherein the starting torque is calculated by increasing the motor torque when the press rollers (3) are stationary until an actual angular velocity is reached at which the press rollers rotate. (Page 5, line 23 to page 6, line 4)

6. A device according to claim 4, wherein a correction deviation (21, 22) of the tension output signal (2) can be calculated by the processor (100), wherein the correction deviation is the difference between an actual tension output signal (2) and a known tension value, especially zero. (Page 6, § 3)

7. A device according to claim 4 or 6, wherein a tension correction value can be calculated by the processor (100) as a function of the at least one roller output signal (6, 11) and the precalculated web tension or the precalculated change in the web tension, wherein the tension correction value is the quotient of a desired-value angle (23) of a curve of desired values (20) and a measured-value angle (24) of a curve of measured values. (Page 7, § 1)

8. A method of calibrating a tension transducer for material webs, comprising the steps of:

   - guiding a material web over a web tension transducer roller (1) and then through a pair of press rollers (3), wherein at least one of the press rollers (3) is driven by a motor (10),

   wherein at least one roller output signal (6, 11), which is a function of an output signal of a motor torque (4) and/or an output signal of a motor speed, is output by the motor and wherein the web tension transducer generates a tension output signal (2) which is a function of the actual tension of the material web,

   - changing the motor torque and/or the motor speed of the motor (10) and reading the actual web tension from the web tension transducer in dependence upon this change, and
   - calculating at least one tension correction value as a function of the at least one roller output signal and the tension output signal by determining an angular deviation of a linearised curve of the signal values for motor torque and/or motor speed in dependence upon the web tension from a curve of desired values.

9. A method according to claim 8, wherein a first tension output signal is also read from the web tension transducer for a known web tension in order to determine a correction deviation, wherein the correction deviation is the difference between the first tension output signal (2) and a known tension value, which corresponds to the known web tension. (Page 6, § 3)

10. A method according to claim 8, wherein a starting torque (14) of the motor (10) is also determined.

11. A method according to claim 10, wherein the changing step takes place between the starting torque (14) and a precalculated motor torque.

12. A method according to claim 11, wherein the linearised curve of values represents the actual web tension in dependence upon the motor torque. (Page 6, lines 28 to 30)

13. A method according to claim 8, wherein the changing step includes changing a motor speed with reference to a desired speed value.

14. A method according to claim 13, wherein the at least one tension correction value is also a function of a known modulus of elasticity E of the paper, wherein the tension correction value is obtained from the quotient of the angle (32) of a curve of measured velocity values (28) and the angle (31) of a curve of precalculated velocity values (29), and wherein the curve of precalculated velocity values (29) is calculated according to the equation dTN=E*dV/V, in which dTN is the change in the web tension, E is the known modulus of elasticity of the paper, dV is the change in the speed and V is the desired speed value. (Page 8, line 15 to line 28)

15. A method according to claim 8, which also comprises the calculation of a calibrated web tension output signal as a function of the actual signals of the web tension transducer and the at least one tension correction value, wherein the calibrated web tension value (110) is calculated by means of the formula (tension output signal (2) - correction deviation (21, 22)) * tension correction value. (Page 7, line 19 in conjunction with page 3, line 4)

16. A method according to claim 9, wherein the known tension is zero.

17. A method according to claim 8, wherein the calculating step also comprises the calculation of a quotient from an angle of calculated values and an angle of measured values in order to form a correction factor.

18. A method according to claim 10, comprising the further step of repeating several times the step of determining a starting torque (14) in order to ascertain an average value for the starting torque (14).

**Revendications**

1. Dispositif pour le calibrage d'un convertisseur de tension pour une bande de matériau avec

   - une paire de tambours presseurs (3)
   - un moteur (10) pour entraîner au moins un des tambours presseurs (3), le moteur pouvant éditer au moins un signal de sortie des tambours (6, 11) qui est une fonction d'un signal de sortie d'un couple du moteur (4) et/ou d'un signal de sortie d'un régime de rotation du moteur,
   - un tambour de convertisseur de tension de bande (1) qui dans le sens du déplacement est disposé en amont des tambours presseurs (3), le convertisseur de tension de bande pouvant générer un signal de sortie de tension (2) qui est une fonction de la tension effective de la bande de matériau (8) et
   - un processeur (100) qui est conçu pour recevoir l'au moins un signal de sortie des tambours (6, 11) et le signal de sortie de tension (2), le processeur (100) étant agencé pour calculer une valeur de correction de la tension en tant que fonction de l'au moins un signal de sortie des tambours (6, 11) et du signal de sortie de tension (2) en déterminant une dérive angulaire d'une courbe de valeurs linéarisée des valeurs des signaux pour le couple du moteur et/ou pour le régime de rotation du moteur en fonction de la tension de la bande par rapport à une courbe de valeur de consigne.

2. Dispositif selon la revendication 1, **caractérisé en ce que** la valeur de correction de la tension est en outre une fonction d'une tension de la bande (TN) calculée préalablement ou d'une modification imposée de la tension de la bande, la tension de la bande étant calculée au moyen de la formule TN = TQ/R, où TN est la tension de la bande, TQ le couple en fonctionnement et R le rayon du tambour du convertisseur de tension de bande (1).

3. Dispositif selon la revendication 1 ou 2, **caractérisé en ce que** l'au moins un signal de sortie des tambours comprend aussi bien un signal de sortie du couple du moteur (6) qu'un signal de sortie du régime de rotation du moteur (11).

4. Dispositif selon la revendication 1, **caractérisé en ce que** le processeur (100) peut éditer une valeur calibrée pour la tension de la bande (110) en tant que fonction du signal de sortie de tension (2) et de la valeur de correction de la tension, la valeur calibrée pour la tension de la bande (110) étant calculée au moyen de la formule (signal de sortie de tension (2) - déviation de correction (21, 22)) * valeur de correction de la tension.

5. Dispositif selon la revendication 1, **caractérisé en ce que** le processeur (100) peut calculer un couple de démarrage (14) du moteur (10) et **en ce que** le couple de démarrage est calculé par le fait qu'à l'arrêt des tambours presseurs (3) le couple du moteur est augmenté jusqu'à ce que soit atteinte une vitesse angulaire effective à laquelle des tambours presseurs tournent.

6. Dispositif selon la revendication 4, **caractérisé en ce que** le processeur (100) peut calculer une déviation de correction (21, 22) du signal de sortie de tension (2), la déviation de correction étant la différence entre un signal de sortie de tension effectif (2) et une valeur de tension connue, en particulier égale à zéro.

7. Dispositif selon la revendication 4 ou 6, **caractérisé en ce que** le processeur (100) peut calculer une valeur de correction de la tension en tant que fonction de l'au moins un signal de sortie des tambours (6, 11) et de la tension de la bande calculée préalablement ou de la modification calculée préalablement de la tension de la bande, la valeur de correction de la tension étant le quotient d'un angle de valeur de consigne (23) d'une courbe de valeur de consigne (20) et d'un angle de valeur mesuré (24) d'une courbe de valeur mesurée.

8. Procédé pour le calibrage d'un convertisseur de tension pour des bandes de matériau comprenant les étapes suivantes :

    - passage d'une bande de matériau par-dessus un tambour du convertisseur de tension de bande (1) et ensuite à travers une paire de tambours presseurs (3), au moins un des tambours presseurs (3) étant entraîné par un moteur (10),

alors que le moteur émet au moins un signal de sortie des tambours (6, 11) qui est une fonction d'un signal de sortie d'un couple du moteur (4) et/ou d'un signal de sortie d'un régime de rotation du moteur et alors que le convertisseur de tension de bande génère un signal de sortie de tension (2) qui est une fonction de la tension de bande effective de la bande de matériau,

    - Modification du couple de moteur et/ou du régime de rotation de moteur du moteur (10) et lecture de la tension effective de la bande du convertisseur de tension de bande en fonction de cette modification et
    - calcul d'au moins une valeur de correction de la tension en tant que fonction de l'au moins un signal de sortie des tambours et du signal de sortie de la tension en déterminant une dérive angulaire d'une courbe de valeur linéarisée des valeurs des signaux pour le couple du moteur et/ou pour le régime de rotation du moteur en fonction de la tension de la bande par rapport à une courbe de valeur de consigne.

9. Procédé selon la revendication 8, **caractérisé en ce que**, pour déterminer une déviation de correction, un premier signal de sortie de tension provenant du convertisseur de tension de bande continue à être lu alors que la tension de bande est connue, la déviation de correction étant la différence entre le premier signal de sortie de tension (2) et une valeur de tension connue qui correspond à la tension de la bande qui est connue.

10. Procédé selon la revendication 8, **caractérisé en ce qu'**en outre un couple de démarrage (14) du moteur (10) est déterminé.

11. Procédé selon la revendication 10, **caractérisé en ce que** l'étape de la modification a lieu entre le couple de démarrage (14) et un couple du moteur calculé préalablement.

**12.** Procédé selon la revendication 11, **caractérisé en ce que** la courbe de valeurs linéarisée représente la tension de effective de la bande en fonction du couple du moteur.

**13.** Procédé selon la revendication 8, **caractérisé en ce que** l'étape de la modification inclut la modification d'un régime de rotation du moteur par rapport à une valeur de consigne du régime de rotation.

**14.** Procédé selon la revendication 13, **caractérisé en ce que** l'au moins une valeur de correction de la tension continue à être une fonction d'un module d'élasticité connu E du papier, **en ce que** la valeur de correction de la tension est obtenue à partir du quotient de l'angle (32) d'une courbe de valeur de vitesse mesurée (28) et de l'angle (31) d'une courbe de valeur de vitesse calculée préalablement (29) et **en ce que** la courbe de valeur de vitesse calculée préalablement (29) est calculée d'après l'équation dTN = E*dV/N, où dTN est la modification de la tension de la bande, E est le module d'élasticité connu du papier, dV est la modification du régime de rotation et V est la valeur de consigne du régime de rotation.

**15.** Procédé selon la revendication 8 qui inclut en outre le calcul d'un signal de sortie calibré de tension de la bande en tant que fonction des signaux effectifs du convertisseur de tension de bande et de l'au moins une valeur de correction de la tension, **caractérisé en ce que** la valeur calibrée de la tension de la bande (110) est calculée selon la formule (signal de sortie de tension (2) - déviation de correction (21, 22)) * valeur de correction de la tension.

**16.** Procédé selon la revendication 9, **caractérisé en ce que** la tension connue est égale à zéro.

**17.** Procédé selon la revendication 8, **caractérisé en ce que** l'étape du calcul inclut en outre le calcul d'un quotient formé à partir d'un angle de valeurs calculé et d'un angle de valeurs mesuré pour former un facteur de correction.

**18.** Procédé selon la revendication 10 avec l'autre étape suivante :

répétition à plusieurs reprises de l'étape de la détermination d'un couple de démarrage (14) pour déterminer une valeur moyenne pour le couple de démarrage (14).

Fig.1

100

110

120

1

2

3

4

6

11

10

13

8

7

EP 1 211 495 B1

Fig.2

Motor Torque

Angular Velocity

Fig.3

Fig.4

EP 1 211 495 B1